Europäisches Patentamt

(19) European Patent Office

Office européen des brevets

(11) Publication number: **0 189 193**
A2

# (12) EUROPEAN PATENT APPLICATION

(21) Application number: 86100845.6

(22) Date of filing: 22.01.86

(51) Int. Cl.⁴: **G 05 B 23/02, G 01 R 31/28**

(30) Priority: 25.01.85 US 695135

(43) Date of publication of application: 30.07.86
Bulletin 86/31

(84) Designated Contracting States: BE CH DE FR GB IT LI
NL SE

(71) Applicant: HONEYWELL INC., Honeywell Plaza,
Minneapolis Minnesota 55408 (US)

(72) Inventor: Mueller, Dale A., 12917 North 45th Avenue,
Plymouth, MN 55442 (US)

(74) Representative: Rentzsch, Heinz et al, Honeywell
Europe S.A. Holding KG Patent- und Lizenzabteilung
Kaiserleistrasse 55, D-6050 Offenbach am Main (DE)

(54) Condition control system and portable test apparatus therefor.

(57) A microcomputer based control system (32) is provided
with a run program and with a test program. The test program
is operated in conjunction with a separate, and removable type
of portable test apparatus (61). This allows for a rugged, simple
and cheap tester (61) to be applied to a highly complex elec-
tronic system (32) that utilizes a microprocessor (33) for its
basic operation.

EP 0 189 193 A2

HONEYWELL INC.                    |    January 20, 1986
Honeywell Plaza                        R1111260 EP
Minneapolis, MN 55408 USA              HR/ep

Condition Control System and Portable Test Apparatus therefor

The use of electronic control modules has rapidly become commonplace.  These electronic control modules typically contain a microcomputer or microprocessor that in turn operate through a preprogrammed sequence to control a load.  The load in many cases is a complex type of device, such as a heat pump.  A typical heat pump contains a reversible refrigeration circuit that is capable of providing both a cooling function and a heating function.  Most of these units further contain auxiliary heat. Auxiliary heat in most cases is a group of electric heaters that can be energized when the heat pump is incapable of supplying sufficient heat to a structure to properly control the temperature within that structure.

Heat pumps can be manufactured as single units that pass through the wall of a building with the inside unit including an inside heat exchange coil, while the balance of the unit is placed outside and contains an outside heat exchange coil.  The outside unit further contains equipment such as the compressor, reversing valve, sensors, and expansion means. It is also common to build this type of a system in two separate and distinct parts that are interconnected by refrigerant tubing and electrical connections.

The advent of electronic controls for these devices that utilize a microcomputer or microprocessor have created severe service problems. The typical refrigeration serviceman does not have sufficient background in electronics to be able to properly troubleshoot, diagnose, and service the electronics that are used to control this type of a system. The typical heat pump system normally contains a heat pump control module that has all of the electronics, and this module is usually mounted with the outside equipment. When a fault occurs, it is commonplace for the serviceman to replace the heat pump control module. If he finds that this does not solve his problem, many times the new module will be left in place and the old module will be returned to its manufacturer as being defective even though it is not at fault. Some means for quick and easy testing of this module is necessary.

One of the early approaches to the testing of this type of equipment was to build a complex piece of test equipment that contained its own microcomputer or microprocessor and was capable of running the heat pump through its normal operating cycle to provide diagnostic information for the serviceman. This type of equipment was found to be impractical because of its cost. It was found that very few, if any, service personnel would purchase this type of equipment or learn how to effectively use it.

In order to pass around these problems and to provide a non-expensive test equipment without impairing the testing quality, the invention provides a control system and a test apparatus as characterized in claim 1. The microprocessor or microcomputer which controls the normal program sequence of the condition control apparatus is alternatively used during the test run for testing the function of the control module and the condition modifying unit and if desired also of the sensors.

The control module contains a microcomputer or microprocessor that has at least two preprogrammed sequences. The first sequence is the normal program or sequence for the microcomputer or microprocessor to operate a condition modifying unit or heat pump in response to the various sensors and elements of the system along with a condition sensor or room thermostat, and to control the temperature within the space or

-4-

structure in response to the room thermostat. The other preprogrammed sequence that is in the microcomputer or microprocessor is a complete test sequence that will be functional only when an appropriate tester is connected to the entire system. In this case, the tester can include the necessary switches, simulated sensors in the form of resistors, indicator lights, and power supply means to operate with the control module, the thermostat, and the ambient temperature modifying unit. The tester does not require that it itself has a microprocessor. The tester relies on the preprogrammed test sequence built into the microcomputer or microprocessor that is contained in the control module means. With this arrangement, a very simple and inexpensive tester can be provided. This tester relies on the preprogrammed test sequence in the conrol module and thereby avoids the expense of providing the microcomputer or microprocessor within the tester itself.

In a preferred embodiment of the invention, there is provided a system for control of temperature within a structure with said system being adapted to be tested with a portable test apparatus, including: a thermostat responsive to an ambient temperature within said structure; an ambient temperature modifying unit for said structure with said unit having a plurality of electrical inputs and a plurality of electrical outputs; said inputs and outputs including connection means; said electrical outputs including sensor means outputs from said unit; said electrical inputs including switched power inputs to said unit; control module means having microcomputer means connected by said connection means to said thermostat and said temperature modifying unit to operate said unit in response to said thermostat to control said ambient temperature by said microcomputer providing a preprogramed control sequence for said unit; said microcomputer means further including a preprogramed test sequence; and a portable test apparatus being connected to said sensor means, said electrical inputs, and said control module with said test apparatus replacing said sensor means outputs; said portable test apparatus operating with said microcomputer means to simulate the operation of said unit with said preprogrammed test sequence thereby testing the functional status of said control module.

Further details and modifications are described in the subclaims and are explained further by reference to the attached drawings.

Figure 1 is a block diagram of a complete heat pump system capable of utilizing the present invention;

Figure 2 is a block diagram of the system including the novel tester;

Figure 3 is a schematic of the tester itself;

Figure 4 is a flow chart of the operation of the system of Figure 2, and;

Figure 5 is a flow chart of a testing sequence for a factory tester.

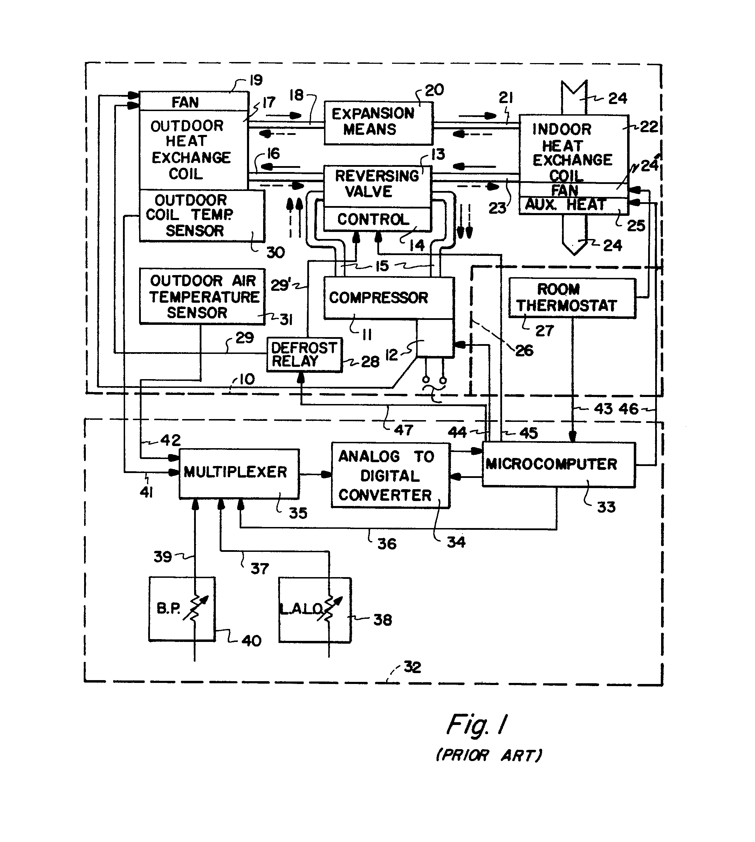

Figure 1 discloses a typical condition modifying system in the form of a heat pump. A heat pump itself is disclosed at 10. The heat pump 10 contains a number of known or standard items such as compressor 11, a contactor control for the compressor 12, a reversing valve 13, the control 14 for the reversing valve, and the piping 15. The reversing valve 13 is connected by piping 16 to an outdoor heat exchange coil 17 (which has a fan 19) and the coil 17 in turn is connected by piping 18 to an expansion means 20. The expansion means 20 is connected by pipe 21 to an indoor heat exchange coil 22 which in turn is connected through a pipe 23 back to the reversing valve 13. The indoor heat exchange coil 22 has a provision at 24 for the forcing of air through the indoor heat exchange coil 22 and through an auxiliary heat generating device 25 such as strip heaters. The air flow 24 is provided by a fan 24' to a structure disclosed at 26 that includes a room thermostat or control means 27 that in turn controls fan 24'. The heat pump 10 further has a number of sensors such as an outdoor coil temperature sensor 30 and an outdoor air temperature sensor 31. A defrost relay 28 completes the heat pump 10 by being connected at 29 and 29' to operate the fan 19 and the control 14 for the reversing valve 13.

Mounted with the heat pump 10 is a heat pump control module means generally disclosed at 32. This type of module typically would be mounted within the heat pump 10 and contains a microcomputer or microprocessor 33, an analog-to-digital converter 34, and a multiplexer 35. The multiplexer 35 is connected at 36 to the microprocessor and has a plurality of inputs. One input 37 is from a Low Ambient Compressor Lock Out (L.A.L.O.) potentiometer 38. A further input 39 is from a Balance Point (B.P.) potentiometer 40. The multiplexer 35 further receives inputs 41 and 42 from the outdoor coil temperature sensor 30 and the outdoor air temperature sensor 31. The microprocessor or microcomputer 33 receives a plurality of inputs 43 from the room thermostat 27 and has output 44 to control the compressor 11, output 45 to control the reversing valve 13, output 46 to control the auxiliary heat 25, and output 47 to control the defrost relay 28.

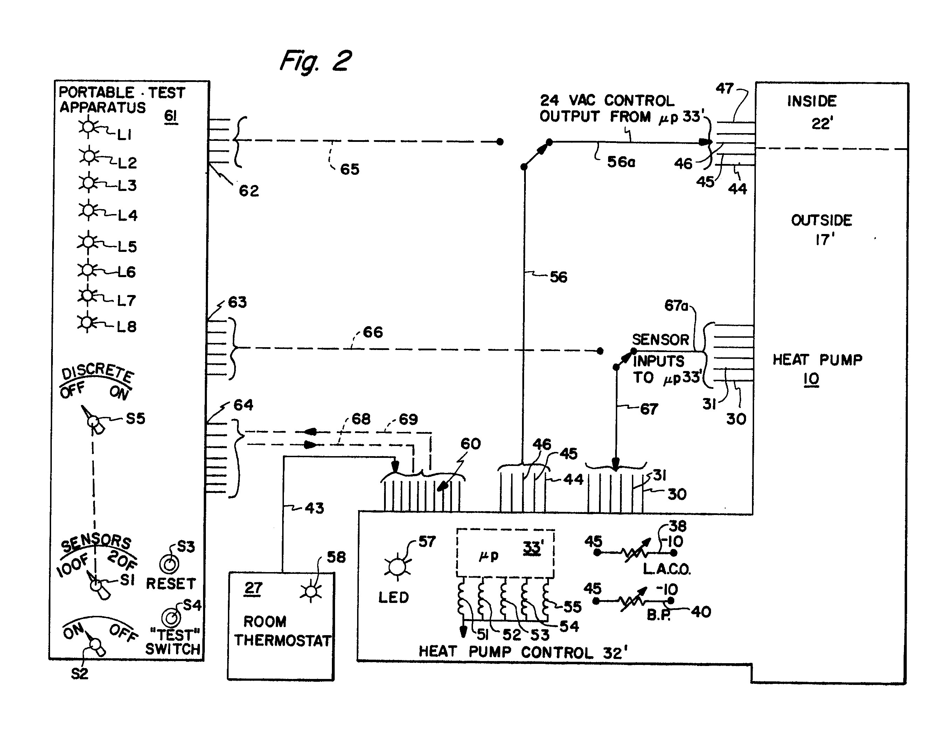

In Figure 2 there is disclosed a heat pump 10 having an inside portion 22' and its outside portion 17'. This heat pump compares to the heat pump of Figure 1. Mounted within the heat pump 10 is a heat pump control or control module 32'. The control module 32' includes the Low Ambient Compressor Lock Out potentiometer 38 and the Balance Point potentiometer 40. Also included within the control module 32' is a microcomputer or microprocessor 33' that is capable of operating the heat pump 10. The microcomputer 33' includes a group of five relays 51, 52, 53, 54, and 55. These relays are used to operate contacts that energize three stages of electric heat, the defrost relay 28, and the compressor 11 through conductors contained in the connection means 56 and 56a. The connection means 56 and 56a have been shown as a solid line connecting in general to the heat pump 10 and identified as a 24 volt alternating current control output from the heat pump control 32'. The conductors 56 and 56a include such conductors as 44, 45, 46 and 47.

The heat pump control or control module 32' further has an indicator light or Light Emitting Diode (LED) 57 that indicates status for the device. Connected to the heat pump control or control module 32' is the room thermostat 27 which utilizes the conductor 43 to a group of conductors or connection means generally disclosed at 60. The conductors at 60 are a means of coupling various circuitry to the heat pump control or control module 32', and to a piece of portable test apparatus that will be discussed subsequently. The room thermostat 27 has an indicator LED 58 which operates in conjunction with an indicator light in the portable test apparatus that will now be discussed.

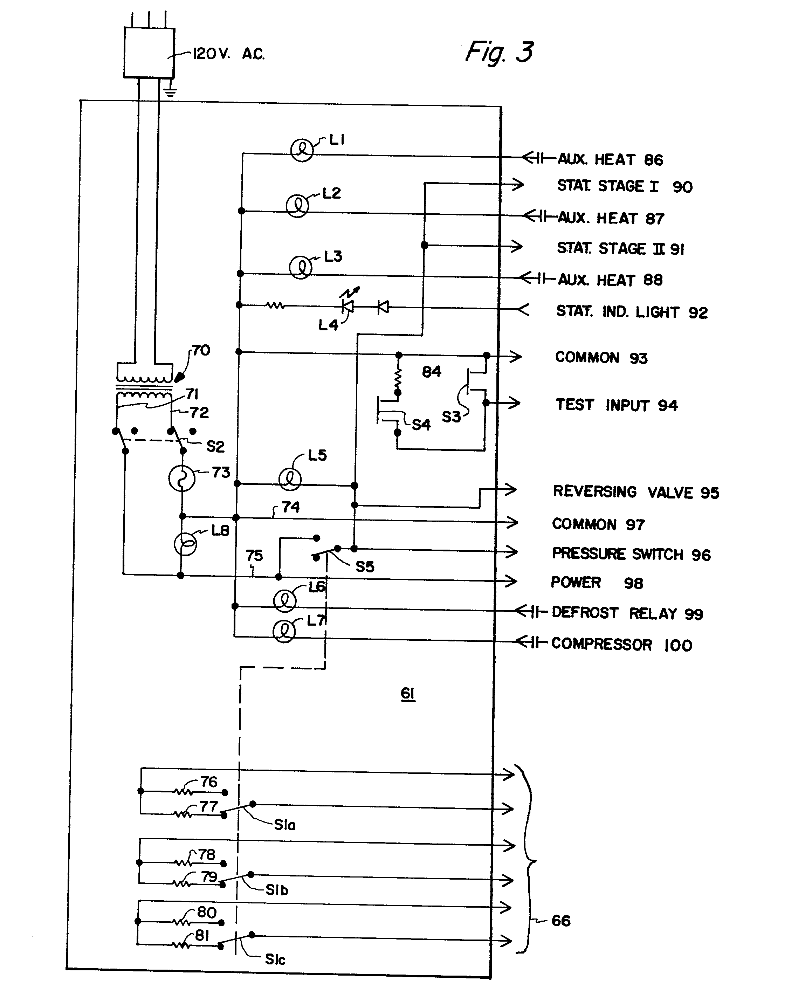

The portable test apparatus is disclosed at 61 and has a group of electrical connection means 62, 63, and 64 for connection of the portable test apparatus 61 to the heat pump 10, and the heat pump control 32'. The terminal 62 can be connected, as shown by the dashed lines 65, to replace the connection of conductor 56a that has been shown as a solid line. In effect, the solid line conductors 56 and 56a show the normal connection, while the dashed line 65 shows the connection when the tester is in place. The connection means 63 is connected by conductors 66 to the sensor inputs of the microprocessor or microcomputer which substitute for the conductors 67 and 67a shown as solid lines. In order to make the device operational, the connection means 64 is added wherein a pair of conductors 68 and 69 interconnect the portable test apparatus 61 and the connection means 60 of the heat pump control 32'. The function and circuitry related to the connection means 62, 63, and 64 will be explained in connection with Figure 3 where the internal circuit diagram of the portable test apparatus 61 is disclosed in detail.

The portable test apparatus 61 has a series of eight indicator lights L1 through L8. The indicator light L4 is a Light Emitting Diode and the balance of the indicator lights L1 through L3, and L5 through L8 are low voltage light bulbs. The portable test apparatus 61 further has an on/off switch S2, a test switch S4, a reset switch S3, and a pair of switches indicated as S1 and S5 that can be ganged together to switch the portable test apparatus 61 between two arbitrary simulated temperature values to test the heat pump control or control module      32' at two fixed points. The switch S1 switches fixed impedance means, while the switch S5 performs an internal switching function. The switches S1 and S5 could be two separate switches or could be a ganged single switch, as will be shown in connection with Figure 3.

In Figure 3 a circuit diagram of the internal schematic of the portable test apparatus 61 is disclosed. Since the components contained within the portable test apparatus 61 are all conventional in nature, only brief mention will be made of individual components.

A 120 volt alternating current source is provided to a step down transformer 70 that has a pair of output conductors 71 and 72 to terminals of switch S2. The switch S2 can be opened so that the step down transformer 70 is out of the circuit. This is the state when the heat pump 10 and heat pump control 32' supply power to the unit. In some cases that may not be possible and the need to supply operating potentials occur. When that is the case (as shown), the switch S2 connects to the conductor 71 and 72 thereby connecting a fuse 73 to the light L8 and back across the conductor 71. In this case the light L8 indicates power is available and power is supplied between the conductors 74 and 75 to the overall device.

Also contained within the test apparatus 61 are a number of fixed impedances indicated at 76 through 81. Typically these would be accurate resistors with the switch S1 capable of switching between two separate resistors indicating either a low temperature, such as 20°F (7°C), or a relatively high temperature, such as 100°F (38°C).

The switch S1 is broken down into a group

of sections S1a, S1b, and S1c. By referring back to Figure 2 it can be seen that by way of this switch, fixed resistors 76 through 81 can be substituted to the heat pump control or control module means 32' to substitute for the sensors that exist in the heat pump 10. This substitution is accomplished through the conductors 66 and 67.

The switch S3 is a reset switch and it connects a 24 volt conductor (common ground) to the test input for the microprocessor 33' to restart a portion of the programmed test sequence contained in the microprocessor or microcomputer 33'. The details of this will be brought out in connection with a flow chart of the operation of the device. Also connected in parallel with the switch S3 is a test switch S4 that introduces a fixed resistor 84 across the terminals to which switch S3 are connected.

Each of the functions of the input and output means for the portable test apparatus 61 will be listed and they appear down the right-hand edge of Figure 3. Three auxiliary heat connections 86, 87, and 88 are provided. It will be noted that each of the auxiliary heat connections includes a relay contact and these relay contacts are each associated with a single one of the relays 51 through 55 in the heat pump control 32'. The system is adapted to be

0189193
-13-

connected to a multiple stage room thermostat and connections 90 and 91 are provided to the first and second stages of a two-stage thermostat (by way of example for the present disclosure). A thermostat indicator light connection 92 is provided for the Light Emitting Diode L4 which in turn functions with the indicator light 58 in the thermostat 27.

A 24 volt common connection 93 is provided along with a test input 94 to the microcomputer or microprocessor 33'. A connection 95 is provided to the reversing valve 13, the connection 96 to a pressure switch, and a connection 97 to a common 24 volt alternating current connection. The other side of the 24 volt alternating current connection is shown at the power connection 98. Two further relay switched conductors 99 and 100 are provided for the defrost relay 28 and the compressor 11 of the heat pump 10.

It can thus be seen that the portable test apparatus 61 has a plurality of electrical inputs and a plurality of electrical outputs all of which include connection means. The connection means in certain cases are switched power connections, while others are test or sensor connections. The function of each of these will become clearer in connection with the flow charts, and the description of operation of the portable test apparatus 61 with a heat pump 10 and a heat pump control 32'.

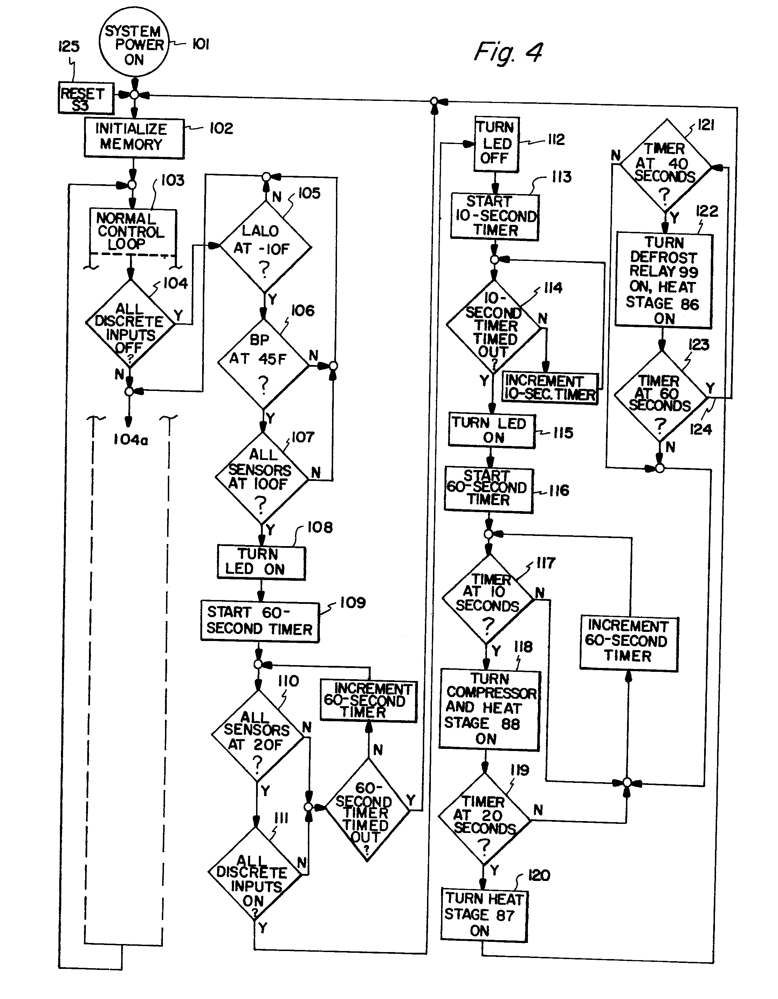

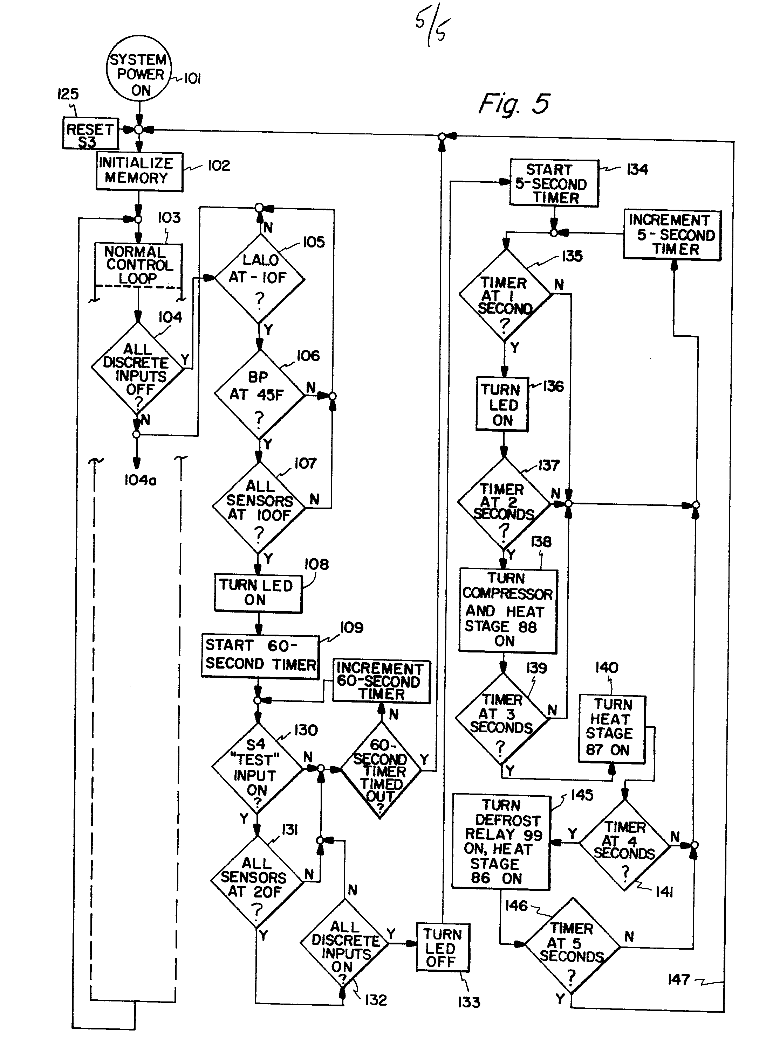

Before discussing the flow charts disclosed in Figures 4 and 5, it is desirable to indicate the application of the portable test apparatus 61 to the heat pump 10 and the heat pump control 32'. The heat pump 10 is powered down and the thermostat 27 is set to an "off" state. The position of the Low Ambient Compressor Lock Out potentiometer 38 and the Balance Point potentiometer 40 is recorded for use after the test has been run. The Balance Point potentiometer 40 is then set to a 45°F (7,5°C) setting, while the Low Ambient Compressor Lock Out potentiometer 38 is set to the -10°F (-24°C) setting. The portable test apparatus 61 is then connected in the system. The electrical outputs connected through the conductors 56 to 56a are removed and replaced by connecting the terminals on the conductors 56 (at 65) to the connection means 62. Sensor conductors 67a are disconnected and conductors 67 are connected to conductors 66. The switch S1 of the tester 61 is set to 100°F (38°C) with the switch S5 automatically set to the "off" position or separately set to the "off" position as indicated in Figure 2. At this point the system is ready to be powered up, and the operation of the system can then be followed from the flow charts of Figures 4 and 5. The flow chart of Figure 4 is for In-Field testing of a heat pump 10 and a control module 32', while the flow chart 5 is for use if the device is used as a Factory Tester. There are some differences in the flow charts, and those will be brought out after a description of the flow chart of Figure 2 is provided.

In Figure 4, the system is powered up at 101 and the memory is initialized at 102. At 103 the system would operate in a normal loop to determine at 104 if all the discrete inputs are at the "off" position. If they are not at the "off" position, the system goes at 104a into a normal control cycle for the heat pump and this control cycle is not of interest as it is not the test cycle. If all the discrete inputs are at the "off" position at 104, the loop continues to check the Low Ambient Compressor Lock Out at 105 to make sure that it is at -10 degrees Fahrenheit. If it is at -10°F (-24°C), the system checks the Balance Point at 106 to make sure that it is set at 45 degrees Fahrenheit. The system then checks at 107 to make sure that all of the fixed resistors that simulate sensors have been set to 100°F (38°C). Assuming that the system has been set up properly, light L4 which is a light emitting diode, turns "on" at 108.

At this point in the system a 60 second timer 109 is started. At 110 all of the sensors must have been set by the switch S1 to the 20°F (7°C) and at 111 all of the discretes are in the "on" position. If the sequence has progressed properly to this point, the light L4 is indicated at 112 to have gone "off". A 10 second timer is then initiated at 113 and is checked at 114 to have timed out merely as a safety or standby time. The light emitting diode L4 then turns "on" at 115, and the 60 cycle timer is started again at 116. At 117 a 10 second interval has occurred, and at 118 the system turns "on" the compressor and the auxiliary heat stage 88. If it is "on" the timer goes to 20 seconds at 119 and the auxiliary heat stage 87 is turned "on". The timer now increments to 40 seconds at 121 and the defrost relay is turned "on" and auxiliary heat stage 86 is turned "on". The turning on of the defrost relay 99 and the heat stage 86 at 122 is then followed at 123 by the timer reaching 60 seconds. At this point, the testing is complete and the routine exits from the timer at 124 to the summation point between the power "on" 101 and the initialization of the memory at 102. The system also has a reset function 125 that can be activated by the switch S3 to bring the system back into its beginning of operation in case the testing has not been properly done within the allowed time.

Assuming that the device tests out properly, the system is powered down, the portable test apparatus 61 is removed, and all of the original connections for the system are reestablished. The Low Ambient Compressor Lock Out potentiometer 38 and the Balance Point potentiometer 40 are reset to their original settings (which were recorded for reference) and the system is then powered up for normal operation.

In Figure 5, a test routine for the same equipment is provided which allows for factory testing at an accelerated rate. In the Factory Test, the accelerated rate utilizes a 5 second timer rather than a 60 second timer 116 of Figure 4 and the outputs to the lights can be read by automatic equipment. With this arrangement, it is possible to test the device at a much faster rate than would be possible in the field where visual indication of the lights status would be required. In the flow chart of Figure 5, all of the functions 101 through 109 are the same as Figure 4 and will not be reviewed. After the start of the 60 second timer at 109, a determination of the tester having been set up for test purposes is verified at 130. At 131, all of the sensors are checked at 20°F (7°C), and at 132, all of the discretes are checked as in the "on" position. At 133, the light emitting diode L4 goes "off", and at 134, a 5 second timer or clock is started. At 135, a 1 second interval occurs and the light emitting diode L4 is brought "on" at 136. At the end of two seconds, as indicated at 137, the sequence continues to turn "on" the compressor and heat stage 88 as shown at 138. The sequence then moves to 139 where a 3 second interval has occurred. If the sequence continues at 140, the heat stage 87 is turned "on", and at 141 a 4 second interval has been reached. At 145, the defrost relay 99 is turned "on" and the heat stage 86 is also turned "on". The sequence then continues at 146 with the timer at 5 seconds. The system then exits at 147 to the summing point between 101 and 102 where again a reset 125 is available in the event that it becomes necessary to restart this system for test purposes.

The flow charts of Figures 4 and 5 basically are the same except for the fact that the high speed test program of Figure 5 can be implemented in a factory environment where the lights or their equivalents can be monitored electronically. In the field it is necessary to provide a slow enough function so that the person operating the test can visually check the function of the lights L1 through L8.

With the present invention, a single microcomputer or microprocessor, that is required for operating a complex system, is utilized for two functions. The first function is by way of a program to operate the equipment, and the second is by way of a test program that allows a simple piece of test equipment to be added to the system with the benefits of a microprocessor, but lacking the expense and complexity of providing the piece of test equipment with its own microprocessor or microcomputer. With this arrangement, a tester that is rugged, cheap, and simple to use can be provided for field use by servicemen who might not have the expertise to operate more complex types of testers. A specific implementation of the present invention in a heat pump control has been disclosed, but it is quite apparent that the concept could be expanded for other applications.

Claims:

1. A condition control system adapted to be tested with a portable test apparatus with said system including
   a) at least one condition responsive sensor (28);
   b) at least one condition modifying unit (10);
   c) a control module (32) contolling said condition modifying unit in response to signals received from said sensor(s);
   d) a microcomputer (33) in said control module together with an associated memory for storing at least one predetermined control program;
      c h a r a c t e r i z e d   i n   t h a t
   e) the memory in said control module (32) comprises a preprogrammed test sequence;
   f) the test apparatus (61) includes means for its connection to said sensor(s) . (27) and to said control module (32) for replacing the output signal of the sensor(s) and for simulating the operation of said modifying unit with said preprogrammed test sequence thereby testing the functional status of said control module.

2. A system according to claim 1 including at least one further sensor (30) responsive to a condition of the modifying unit (10),   c h a r a c t e r i z e d   i n   t h a t   the test apparatus (61) includes further connecting means for its connection to said further sensor and to said control module (32) for replacing the output signal of the further sensor thereby testing the functional status of said further sensor.

3. A system of claim 1 or 2 for controlling the temperature within a structure or space,   c h a r a c t e r i z e d   b y:
   a) a thermostat (27) responsive to an ambient temperature within said structure or space;
   b) an ambient temperature modifying unit (10) having a plurality of electrical inputs (44, 45, 46, 47) and a plurality of electrical outputs (41, 42, 43);

c) said inputs and outputs including connection means;

d) said electrical outputs including sensor means outputs (41, 42) from said unit;

e) said electrical inputs including switched power inputs (44, 45, 46, 47) to said unit;

f) the microcomputer (33) being connected by said connection means to said thermostat (27) and said temperature modifying unit (10) to operate said unit in response to said thermostat to control said ambient temperature by said microcomputer providing a preprogramed control sequence for said unit;

g) the portable test apparatus (61) being connectable to said sensor means, said electrical inputs, and said control module, with said test apparatus (61) replacing said sensor means outputs; said portable test apparatus operating with said microcomputer to simulate the operation of said unit with said preprogrammed test sequence thereby testing the functional status of said control module.

4. A system of claim 1, 2 or 3, c h a r a c t e r i z e d i n t h a t said test apparatus (61) includes a plurality of switches (51, 52, 53, 54) with some of said switches being capable of being set to select known fixed impedances (76 - 81) as inputs to said control module to simulate known operating conditions to in turn test said control module (33).

5. A system of claim 4, c h a r a c t e r i z e d i n t h a t said known fixed impedances are resistors (76-81).

6. A system of one of the claims 1 to 5, c h a r a c t e r i z e d i n t h a t some of said switches (51, 55) are adapted to select two reference operating points for said control module (33).

7. A system of claim 6 for control of temperature within a structure as described in claim 4, wherein said test

0189193

apparatus (61) further includes indicator lights (L1 - L8) which are capable of being energized through said control module (33).

8. A system of one of the claims 3 to 7, c h a r a c t e r-i z e d   i n   t h a t   said test apparatus (61) is powered from said control module (33) and said ambient temperature modifying unit (10).

9. A system of one of the claims 3 to 7, c h a r a c t e r-i z e d   i n   t h a t   said test apparatus (61) is powered from a self-contained transformer (70).

10. A system of one of the preceding claims, c h a r a c -t e r i z e d   i n   t h a t   said test apparatus (61) includes a switch (53) to cause said control module (33) to be reset to restart a portion of said preprogrammed test sequence.

Fig. 1
(PRIOR ART)

Fig. 2

*Fig. 3*

Fig. 4

SYSTEM POWER ON — 101

125 — RESET S3

INITIALIZE MEMORY — 102

103 — NORMAL CONTROL LOOP

104 — ALL DISCRETE INPUTS OFF ?

104a

105 — LALO AT -10F ?

106 — BP AT 45F ?

107 — ALL SENSORS AT 100F ?

108 — TURN LED ON

109 — START 60-SECOND TIMER

110 — ALL SENSORS AT 20F ?

INCREMENT 60-SECOND TIMER

60-SECOND TIMER TIMED OUT ?

111 — ALL DISCRETE INPUTS ON ?

TURN LED OFF — 112

START 10-SECOND TIMER — 113

114 — 10-SECOND TIMER TIMED OUT ?

INCREMENT 10-SEC. TIMER

TURN LED ON — 115

START 60-SECOND TIMER — 116

117 — TIMER AT 10 SECONDS ?

118 — TURN COMPRESSOR AND HEAT STAGE 88 ON

119 — TIMER AT 20 SECONDS ?

INCREMENT 60-SECOND TIMER

120 — TURN HEAT STAGE 87 ON

121 — TIMER AT 40 SECONDS ?

122 — TURN DEFROST RELAY 99 ON, HEAT STAGE 86 ON

123 — TIMER AT 60 SECONDS ?

124

*Fig. 5*

SYSTEM POWER ON — 101

125 — RESET S3

INITIALIZE MEMORY — 102

103 — NORMAL CONTROL LOOP

104 — ALL DISCRETE INPUTS OFF ?

104a

105 — LALO AT -10F ?

106 — BP AT 45F ?

107 — ALL SENSORS AT 100F ?

108 — TURN LED ON

109 — START 60-SECOND TIMER

INCREMENT 60-SECOND TIMER

130 — S4 "TEST" INPUT ON ?

60-SECOND TIMER TIMED OUT ?

131 — ALL SENSORS AT 20F ?

132 — ALL DISCRETE INPUTS ON ?

133 — TURN LED OFF

134 — START 5-SECOND TIMER

INCREMENT 5-SECOND TIMER

135 — TIMER AT 1 SECOND ?

136 — TURN LED ON

137 — TIMER AT 2 SECONDS ?

138 — TURN COMPRESSOR AND HEAT STAGE 88 ON

139 — TIMER AT 3 SECONDS ?

140 — TURN HEAT STAGE 87 ON

145 — TURN DEFROST RELAY 99 ON, HEAT STAGE 86 ON

141 — TIMER AT 4 SECONDS ?

146 — TIMER AT 5 SECONDS ?

147